# EUROPEAN PATENT SPECIFICATION

(11) **EP 0 665 371 B1**
(45) Date of publication and mention of the grant of the patent: **12.08.1998**
(21) Application number: 95200291.3
(22) Date of filing: 01.05.1992
(51) Int. Cl.: F02F 11/00, F16J 15/10, F16J 15/06

(54) **Split-type gasket**
Geteilte Abdichtung
Plaque d'échanchéité divisée

(30) Priority: 17.05.1991 JP 35001/91; 17.05.1991 JP 35003/91
(43) Date of publication of application: 02.08.1995
(62) Divisional of application: 92303975.4
(73) Proprietor: TOKYO GASKET CO., LTD., Hiki-gun, Saitama-ken (JP)
(72) Inventor: Uchida, Tadamasa, Tsurugashima-shi, Saitama-ken (JP); Fukushima, Kowa, Sakado-shi, Saitama-ken (JP); Morita, Yasushi, Kiyose-shi, Tokyo (JP)
(74) Representative: Leale, Robin George

(56) References cited:
- FR-A- 2 659 122
- US-A- 3 175 832

## Description

This invention refers to a split-type gasket, particularly one configured in ring form and made from a soft material, such as an oil pan gasket to be applied to the contact surfaces between a cylinder block and an oil pan in an engine.

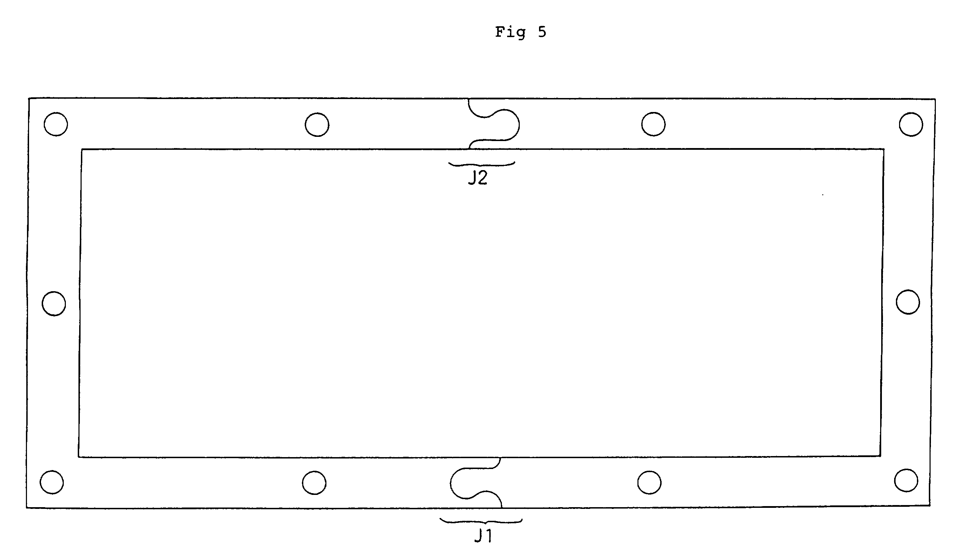

As is well known, a gasket made of a sheet of asbestos containing a soft material, for example, can be punched out in one stroke by means of a punch die. As an antipollution measure, the use of a soft material free from asbestos is desirable, but sheet material of this type is expensive. In order to reduce the cost of a ring-shaped gasket of poor yield, an internal residue which has been punched out in ring form may be reused at times, but with remaining combination problems. Although it is known to form a gasket as a split-type, as illustrated in Fig. 5 of the accompanying drawings, and to apply liquid gasket material to junctions J1 and J2 when assembling it, leaks can easily occur at junction regions where there is a lower contact pressure, which is troublesome and time-consuming.

Although it is known to connect respective parts of a split-type gasket through a piece which is formed with a bolt hole and is made of a different material, the combination of different materials raises other problems such as selection of gasket material and thickness, control of contact pressure and the clamping force of the bolt, and the like, and the presence of connecting areas on both sides of the piece concerned leaves a problem of numerous possible leakage points.

It is also known from US-A-3231289 (Carrell) to provide a split-type gasket comprising at least two gasket sections formed with bolt holes and arranged to be interconnected in the same plane at respective joints to form the gasket, in which each of said joints is formed by a protruding portion on one gasket section and a complementary recess in the other gasket section arranged to receive said protruding portion in interlocking fashion.

According to the present invention, one of the bolt holes of said one gasket section is located closely adjacent the said protruding portion, in the adjacent body of the said one gasket section, and the edge of the said protruding portion on the said one gasket section is formed, in the order now specified, on one side as a concave circular arc merging at its inner end with the body of the said one gasket section and merging at its outer end with a convex circular arc which forms the distal extremity of the protruding portion whereby said one side is S-shaped, said convex arc merging with a straight edge which forms the other side of the protruding portion and merges with the body of the gasket section by way of a further concave circular arc, and the edge of the said recess in the said other gasket section is complementarily shaped.

With such an arrangement, in use of the gasket, the respective gasket sections are interconnected in a region of homogeneous gasket material closely adjacent a bolt, where the high and stable contact pressure provided by the bolt increases the reliability of the interlocking of the gasket sections, and prevents leakage.

Preferably the distance from the distal extremity of the said protruding portion to the centre of the said adjacent bolt hole is not more than 23% of the spacing between the said bolt holes in the gasket sections. It is further preferred that an imaginary transverse line representing the inner end of the said protruding portion does not intersect the said adjacent bolt hole. Both of these factors contribute substantially to the reliability of the joint and the prevention of leakage in use of the gasket.

Some embodiments of the invention will now be described by way of example and with reference to the accompanying drawings, in which:-
Fig. 1 is a plan view of a first embodiment of a split-type gasket according to the invention;
Fig. 2 is a plan view of one section of a joint in the embodiment of Fig. 1;
Fig. 3 is a plan view of the other section of the joint;
Fig. 4 is a plan view of another embodiment of a joint; and
Fig. 5 is a plan view of a known gasket.

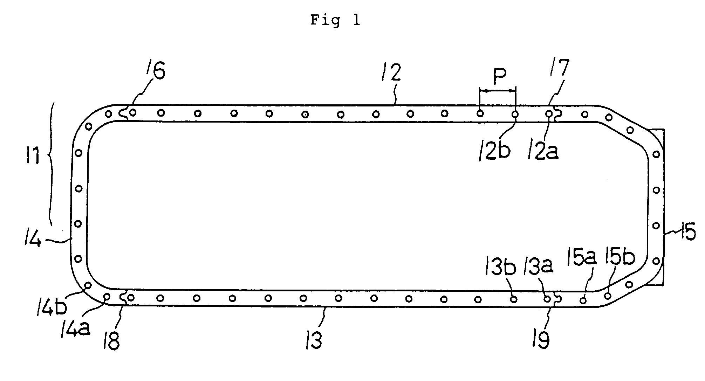

As illustrated in Fig. 1, a split-type gasket 11 comprises two straight gasket sections 12 and 13 and two U-shaped curved gasket sections 14 and 15, all provided with bolt holes 12a, 12b, etc., 13a, 13b, etc., 14a, 14b, etc., and 15a, 15b, etc. The straight sections 12 and 13 and curved sections 14 and 15 are connected together at joints 16 to 19.

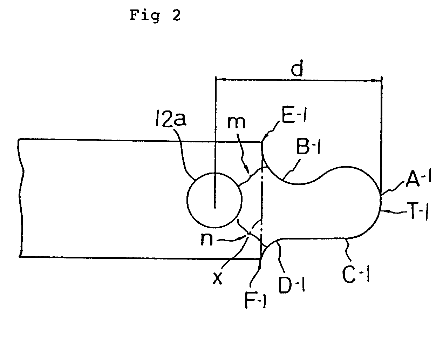

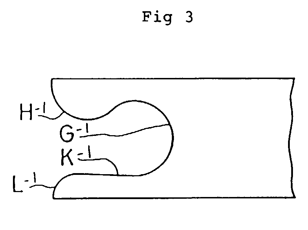

Figs. 2 and 3 show these joints, in particular joint 17 near bolt hole 12a by way of example. Here the joint section of Fig. 2 comprises a protruding portion with its edge formed by concave and convex circular arcs A-1 and B-1 which are mutually contiguous to form an S-shape, straight edge C-1, and concave circular arc D-1. Distance d between the distal extremity T-1 of the protruding portion and the center of bolt hole 12a is not more than 23% of bolt pitch P (see Fig. 1). Thus if P=80 mm and the ratio is 20%, then d=16 mm. Furthermore the arrangement is such that line X connecting points E-1 and F-1 at the inner end of the protruding portion, where circular arcs B-1 and D-1 meet the outside and inside edges of the gasket respectively, does not intersect bolt hole 12a.

Referring to Fig. 3, the complementary recess in the other gasket section is made up of circular arcs G-1 and H-1, straight edge K-1 and circular arc L-1, all arranged to fit with the aforementioned circular arcs A-1 and B-1, straight edge C-1 and circular arc D-1, respectively.

Thus, when the set of gasket sections 12 to 15 is assembled in a common plane on a mounting surface with joints 16 to 19 interconnected, and bolts are inserted through the various bolt holes, no separation of the gasket sections at the joints 16 to 19 can take place. Furthermore, since the contact pressure is sufficient and homogeneous material is used at the junctions, no leakage will occur.

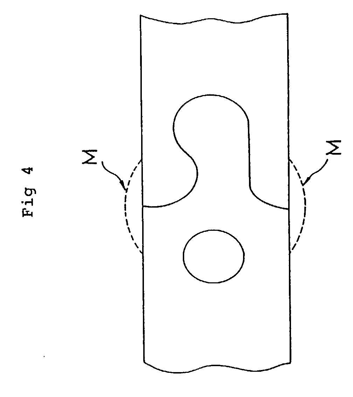

As shown in Fig. 4, one or both sides of the bolt hole may be laterally extended in the form of a circular arc, as at lines M and M, if the edge regions of the gasket on either side of the bolt hole would otherwise be so narrow that leakage might occur.

It will thus be understood that the present invention, at least in its preferred forms, provides split-type gaskets which are not prone to leak even without liquid gasket application, with low costs of production in terms of both labour and materials, as well as improved yield.

## Claims

1. A split-type gasket (11) comprising at least two gasket sections (12-15) formed with bolt holes and arranged to be interconnected in the same plane at respective joints to form the gasket, in which each of said joints is formed by a protruding portion on one gasket section and a complementary recess in the other gasket section arranged to receive said protruding portion in interlocking fashion, characterised in that one of the bolt holes of said one gasket section is located closely adjacent the said protruding portion, in the adjacent body of the said one gasket section, and in that the edge of the said protruding portion on the said one gasket section is formed, in the order now specified, on one side as a concave circular arc (B-1) merging at its inner end with the body of the said one gasket section and merging at its outer end with a convex circular arc (A-1) which forms the distal extremity of the protruding portion whereby said one side is S-shaped, said convex arc merging with a straight edge (C-1) which forms the other side of the protruding portion and merges with the body of the gasket section by way of a further concave circular arc (D-1), and the edge of the said recess in the said other gasket section is complementarily shaped.

2. A gasket as claimed in claim 1, wherein the distance (d) from the distal extremity of the said protruding portion to the centre of the said adjacent bolt hole is not more than 23% of the spacing (P) between the said bolt holes in the gasket sections.

3. A gasket as claimed in claim 1 or 2, wherein an imaginary transverse line (X) representing the inner end of the said protruding portion does not intersect the said adjacent bolt hole.

## Patentansprüche

1. Geteilte Dichtung (11) mit mindestens zwei Dichtungsabschnitten (12-15), die mit Schraubenlöchern ausgebildet und in Hinblick darauf angeordnet sind, in derselben Ebene an jeweiligen Verbindungen zur Bildung der Dichtung miteinander verbunden zu werden, bei der jede der Verbindungen durch einen vorstehenden Bereich an einem Dichtungsabschnitt und eine komplementäre Aussparung in dem anderen Dichtungsabschnitt ausgebildet ist, die dazu bestimmt ist, den vorstehenden Bereich in verriegelnder Weise aufzunehmen, **dadurch gekennzeichnet,** daß eines der Schraubenlöcher des einen Dichtungsabschnitts in der Nähe des vorstehenden Bereichs in dem benachbarten Körper des einen Dichtungsabschnitts angeordnet ist und daß der Rand des vorstehenden Bereichs an dem einen Dichtungsabschnitt, in der jetzt angegebenen Reihenfolge, an einer Seite als ein konkaver kreisförmiger Bogen (B-1), der an seinem inneren Ende in den Körper des einen Dichtungsabschnitts übergeht und der an seinem anderen Ende in einen konvexen kreisförmigen Bogen (A-1) übergeht, der das distale Ende des vorstehenden Bereichs bildet, ausgebildet ist, wodurch die eine Seite S-förmig gestaltet ist, wobei der konvexe Bogen in einen geradlinigen Rand (C-1) übergeht, der die andere Seite des vorstehenden Bereichs bildet und der in den Körper des Dichtungsabschnitts mittels einen weiteren konkaven kreisförmigen Bogens (D-1) übergeht, und wobei der Rand der Aussparung in dem anderen Dichtungsabschnitt komplementär gestaltet ist.

2. Dichtung nach Anspruch 1, wobei der Abstand (d) des distalen Endes des vorstehenden Bereichs zu dem Zentrum des benachbarten Schraubenlochs nicht größer als 23 % des Abstands (P) zwischen den Schraubenlöchern in dem Dichtungsabschnitt ist.

3. Dichtung nach Anspruch 1 oder 2, wobei eine imaginäre transversale Linie (X), die das innere Ende des vorstehenden Bereichs repräsentiert, das benachbarte Schraubenloch nicht schneidet.

## Revendications

1. Garniture (11) de type divisé comprenant au moins deux tronçons de garniture (12-15), dans lesquels sont formés des trous de passage de boulons et qui sont destinés à être interconnectés dans le même plan au niveau de joints respectifs pour former la garniture, dans laquelle chacun desdits joints est formé par une partie en saillie sur un tronçon de garniture et une cavité complémentaire située dans l'autre tronçon de garniture et destinée à loger avec emboîtement ladite partie en saillie, caractérisée en ce que l'un des trous de passage de boulons dudit premier tronçon de garniture est situé directement au voisinage de ladite partie en saillie, dans le corps adjacent dudit premier tronçon de garniture, et en ce que le bord de ladite partie saillante sur ledit premier tronçon de garniture est formé, dans l'ordre maintenant spécifié, sur un premier côté sous la forme d'un arc circulaire concave (B-1) réuni, au niveau de son extrémité intérieure, au corps dudit premier tronçon de garniture et réuni, au niveau de son extrémité extérieure, à un arc circulaire convexe (A-1) qui forme l'extrémité distale de la partie en saillie, de telle sorte que ledit premier côté est en forme de S, ledit arc convexe rejoignant un bord rectiligne (C-1) qui forme l'autre côté de la partie en saillie et est réuni au corps du tronçon de garniture par l'intermédiaire d'un autre arc circulaire concave (D-1), et le bord de ladite cavité situé dans ledit autre tronçon de garniture possède une forme complémentaire.

2. Garniture selon la revendication 1, dans laquelle la distance (d) entre l'extrémité distale de ladite partie en saillie et le centre dudit trou adjacent de passage de boulon n'est pas supérieure à 23 % de l'espacement (P) entre lesdits trous de passage de boulons situés dans les tronçons de garniture.

3. Garniture selon la revendication 1 ou 2, dans laquelle une droite transversale imaginaire (X) représentant l'extrémité intérieure de ladite partie en saillie ne recoupe pas ledit trou adjacent de passage de boulon.
